# EUROPEAN PATENT SPECIFICATION

(11) **EP 4 595 681 B1**
(45) Date of publication and mention of the grant of the patent: **09.12.2026**
(21) Application number: 23951050.6
(22) Date of filing: 29.09.2023
(51) Int. Cl.: H04W 76/00, H04W 76/15, H04W 76/12, H04W 28/08, H04W 28/02, H04L 65/80, H04W 28/086, H04W 28/088, H04W 28/10, H04L 69/14

(54) **METHODS, ARCHITECTURES, APPARATUSES AND SYSTEMS FOR INTEGRATING SUPPORT FOR RELIABILITY AND AVAILABILITY IN MOBILE NETWORKS**
VERFAHREN, ARCHITEKTUREN, VORRICHTUNGEN UND SYSTEME ZUR INTEGRATION VON UNTERSTÜTZUNG FÜR ZUVERLÄSSIGKEIT UND VERFÜGBARKEIT IN MOBILEN NETZWERKEN
PROCÉDÉS, ARCHITECTURES, APPAREILS ET SYSTÈMES POUR INTÉGRER UNE PRISE EN CHARGE DE LA FIABILITÉ ET DE LA DISPONIBILITÉ DANS DES RÉSEAUX MOBILES

(30) Priority: 30.09.2022 US 202263411847 P
(43) Date of publication of application: 06.08.2025
(73) Proprietor: InterDigital Patent Holdings, Inc., Wilmington, DE 19809 (US)
(72) Inventor: BERNARDOS, Carlos Jesus, 28911 Leganes Madrid (ES); MOURAD, Alain, London Greater London EC2A 3QR (GB); KHEIRKHAH, Morteza, London Greater London EC2A 3QR (GB); COGALAN, Tezcan, London Greater London SW20 8JX (GB)
(74) Representative: AWA Sweden AB
(86) International application number: PCT/US2023/034116
(87) International publication number: WO 2025/080242

(56) References cited:
- "3rd Generation Partnership Project; Technical Specification Group Core Network and Terminals; 5G System; Access Traffic Steering, Switching and Splitting (ATSSS); Stage 3 (Release 17)", 23 September 2022 (2022-09-23), XP052272954, Retrieved from the Internet <URL:https://ftp.3gpp.org/3guInternal/3GPP_ultimate_versions_to_be_transposed/sentToDpc/24193-h60.zip 24193-h60.docx> [retrieved on 20220923]
- FINN HUAWEI P THUBERT CISCO B VARGA J FARKAS ERICSSON N: "Deterministic Networking Architecture; rfc8655.txt", 24 October 2019 (2019-10-24), pages 1 - 24, XP015135163, Retrieved from the Internet <URL:https://tools.ietf.org/html/rfc8655> [retrieved on 20191024]
- "3rd Generation Partnership Project; Technical Specification Group Core Network and Terminals; Non-Access-Stratum (NAS) protocol for 5G System (5GS); Stage 3; (Release 18)", vol. CT WG1, no. V18.0.1, 26 September 2022 (2022-09-26), pages 1 - 1007, XP052211191, Retrieved from the Internet <URL:https://ftp.3gpp.org/Specs/archive/24_series/24.501/24501-i01.zip 24501-i01.docx> [retrieved on 20220926]
- THUBERT P ET AL: "Reliable and Available Wireless Framework draft-ietf-raw-framework-01; draft-ietf-raw-framework-01.txt", no. 1, 8 June 2022 (2022-06-08), pages 1 - 18, XP015152218, Retrieved from the Internet <URL:https://tools.ietf.org/html/draft-ietf-raw-framework-01> [retrieved on 20220608]

## Description

### FIELD

The present disclosure is generally directed to the fields of communications, software and encoding, including, for example, to methods, architectures, apparatuses, systems that may generally relate to providing reliability and/or availability in mobile networks.

### SUMMARY

An embodiment may be directed to a method that may include sending, by a wireless transmit/receive unit (WTRU), a first message that may include first information indicating to use deterministic networking and reliable and available wireless (DETNET/RAW) for steering functionality and to use a multiple access protocol data unit (PDU) session. The method may include receiving a second message that may include second information indicating a set of access traffic steering, switching and splitting (ATSSS) rules, where the set of ATSSS rules includes one or more of Packet Replication, Elimination, and Ordering Functions (PREOF) and/or packet automatic repeat request, replication, elimination and ordering (PAREO) rules. The method may include encapsulating a PDU of at least one traffic flow according to one or more of the set of ATSSS rules that include at least one of the PREOF and/or PAREO rules, and sending the encapsulated PDU to one of a plurality of access network nodes associated with the multiple access PDU session.

An embodiment may be directed to a WTRU that may include circuitry, which may include one or more of a transmitter, receiver, processor and/or memory. The circuitry may be configured to send a first message that may include first information indicating to use deterministic networking and reliable and available wireless (DETNET/RAW) for steering functionality and to use a multiple access protocol data unit (PDU) session. The circuitry may be configured to receive a second message that may include second information indicating a set of access traffic steering, switching and splitting (ATSSS) rules, where the set of ATSSS rules includes one or more of Packet Replication, Elimination, and Ordering Functions (PREOF) and/or packet automatic repeat request, replication, elimination and ordering (PAREO) rules. The circuitry may be configured to encapsulate a PDU of at least one traffic flow according to one or more of the set of ATSSS rules that include at least one of the PREOF and/or PAREO rules, and to send the encapsulated PDU to one of a plurality of access network nodes associated with the multiple access PDU session.

An embodiment may be directed to a method that may include receiving, by a network element from a WTRU, a first message comprising first information indicating to use deterministic networking and reliable and available wireless (DETNET/RAW) for steering functionality and to use a multiple access protocol data unit (PDU) session. The method may also include sending, to the WTRU, a second message comprising second information indicating a set of access traffic steering, switching and splitting (ATSSS) rules. The set of ATSSS rules may include one or more of packet replication, elimination, and ordering functions (PREOF) and/or packet automatic repeat request, replication, elimination and ordering (PAREO) rules.

An embodiment may be directed to a network element or node comprising circuitry that may include one or more of a transmitter, receiver, processor and/or memory. The circuitry configured may be configured to receive, from a WTRU, a first message comprising first information indicating to use deterministic networking and reliable and available wireless (DETNET/RAW) for steering functionality and to use a multiple access protocol data unit (PDU) session. The circuitry may also be configured to send, to the WTRU, a second message comprising second information indicating a set of access traffic steering, switching and splitting (ATSSS) rules. The set of ATSSS rules may include one or more of packet replication, elimination, and ordering functions (PREOF) and/or packet automatic repeat request, replication, elimination and ordering (PAREO) rules.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is an example deterministic networking (DETNET) data plane protocol stack, according to an embodiment;
FIG. 3 is a system diagram depicting a UE that sets up two protocol data unit (PDU) sessions towards the same data network (DN), according to an embodiment;
FIG. 4 is a system diagram depicting multiple UEs per device being used for user plane redundancy, according to an embodiment;
FIG. 5 is a system diagram depicting an example of a communication scenario, according to an embodiment;
FIG. 6 is a diagram illustrating application-level performance, end-to-end system performance, and mobile system performance, according to an embodiment;
FIG. 7 is an example of the extended 3GPP mobile architecture, according to an embodiment;
FIG. 8 illustrates an example diagram of the UE model when extended with the new DETNET/RAW steering functionality, according to some embodiments;
FIG. 9 illustrates an example signaling diagram, according to certain example embodiments;
FIG. 10 illustrates an example of an extension header, according to an embodiment;
FIG. 11 illustrates an example of an extension header, according to an embodiment;
FIG. 12 illustrates an example of an extension header, according to an embodiment; and
FIG. 13 illustrates an example flowchart of a method for providing reliability and/or availability in mobile networks, according to some embodiments.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

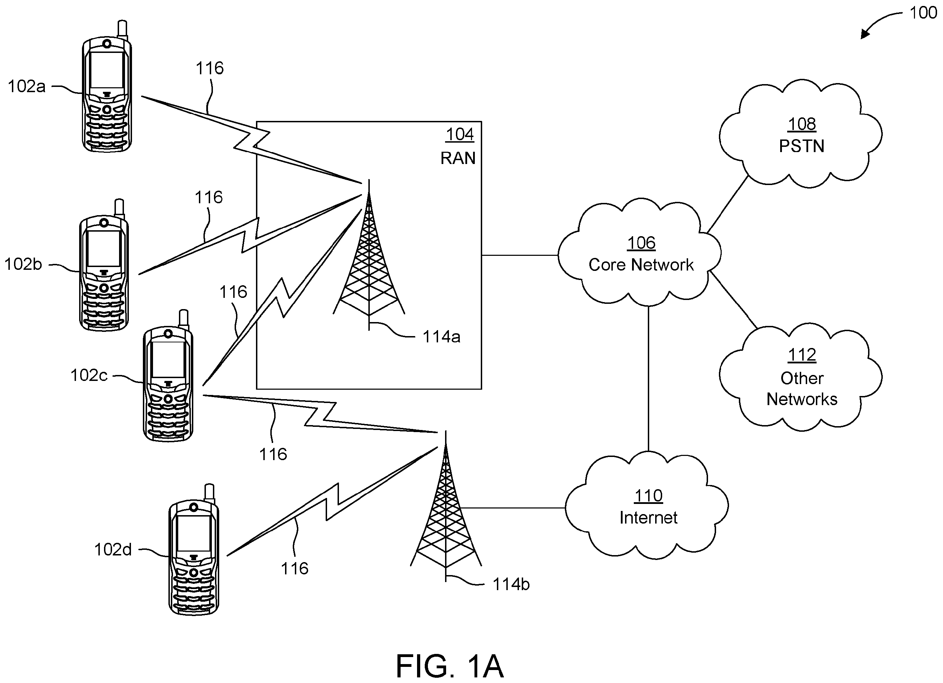

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d, or any other WTRU described or mentioned herein, may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

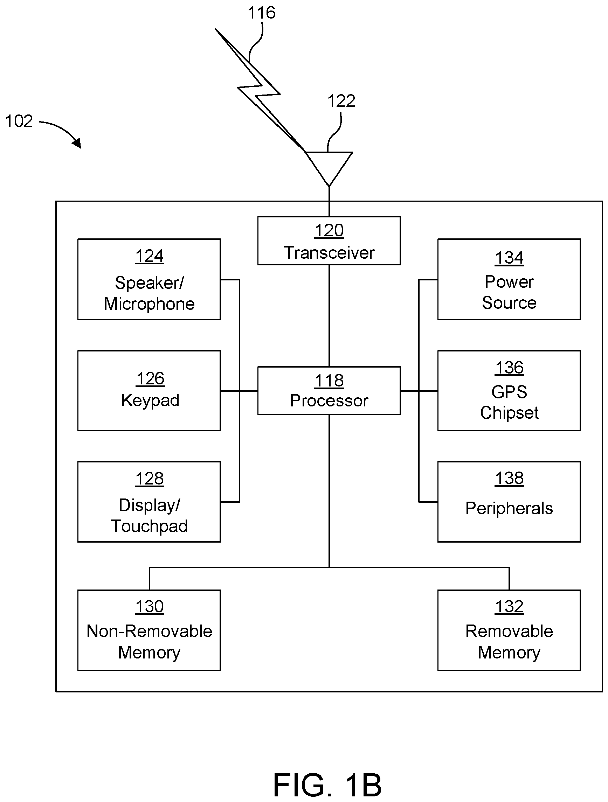

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

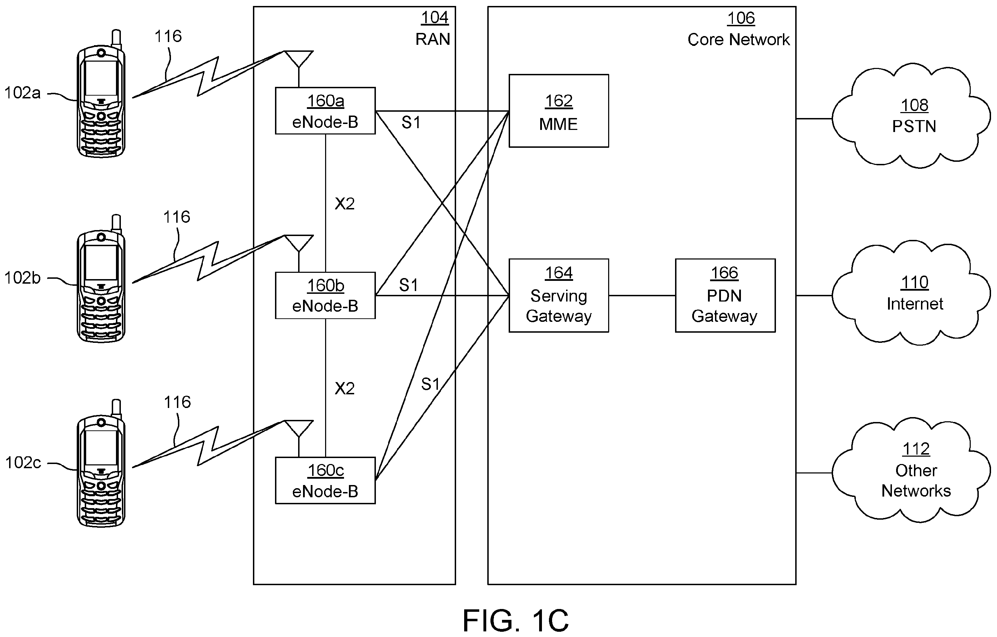

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

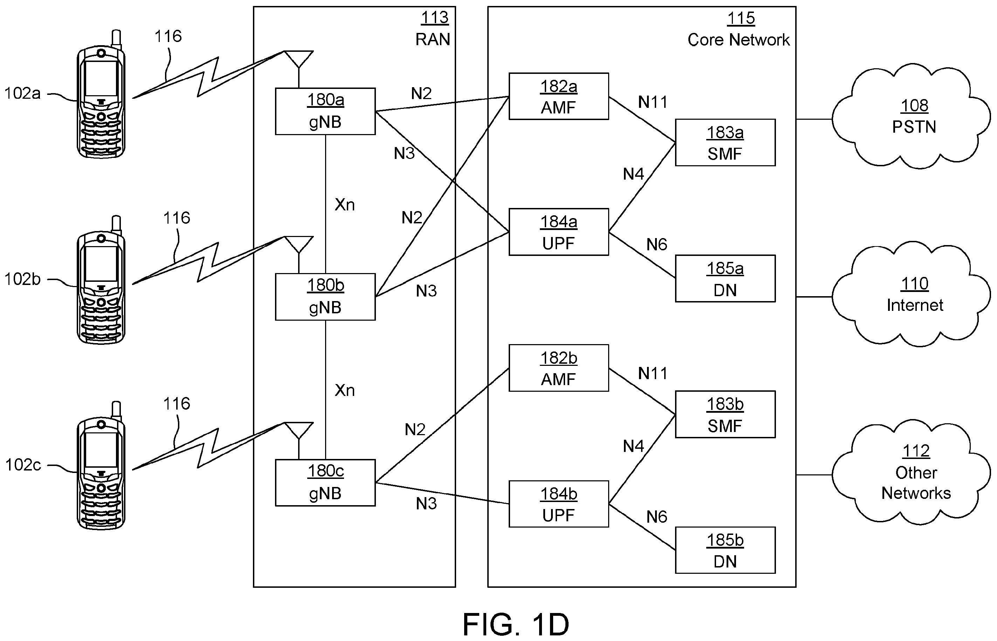

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMPs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The Internet Engineering Task Force (IETF) Deterministic Networking (DETNET) Working Group focuses on deterministic data paths that operate over Layer 2 bridged and Layer 3 routed segments, where such paths can provide bounds on latency, loss, and packet delay variation (jitter), and high reliability.

DETNET operates at the IP layer and delivers service over lower-layer technologies, such as multiprotocol label switching (MPLS) and IEEE 802.1 Time-Sensitive Networking (TSN). DETNET provides a reliable and available service, for example, by dedicating network resources such as link bandwidth and buffer space to DETNET flows and/or classes of DETNET flows, and by replicating packets along multiple paths. Unused reserved resources are available to non-DETNET packets as long as all guarantees are fulfilled (e.g., see [1] N. Finn et al., "Deterministic Networking Architecture," RFC 8655, October 2019).

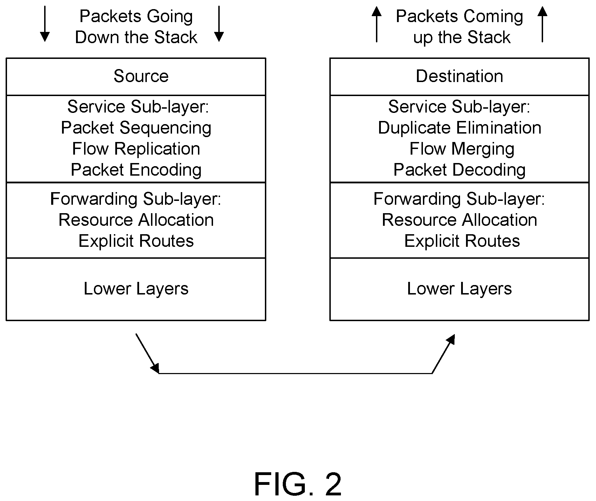

The DETNET functionality may be implemented in two adjacent sub-layers in the protocol stack. FIG. 2 illustrates an example DETNET data plane protocol stack, which includes the DETNET service sub-layer and the DETNET forwarding sub-layer. The DETNET service sub-layer provides DETNET service, e.g., service protection, to higher layers in the protocol stack and applications. The DETNET forwarding sub-layer supports DETNET service in the underlying network, e.g., by providing explicit routes and resource allocation to DETNET flows.

The DETNET service sub-layer may include the packet replication function (PRF), packet elimination function (PEF), and packet ordering function (POF) for use in DETNET edge, relay node, and end-system packet processing (e.g., see [1] RFC 8655). These functions can be enabled in a DETNET edge node, relay node, or end system. The collective name for all three functions is Packet Replication, Elimination, and Ordering Functions (PREOF). The packet replication and elimination service protection method may involve four capabilities, as discussed in the following.

Sequencing information may be provided to the packets of a DETNET compound flow. This may be done by adding a sequence number or time stamp as part of DETNET, or it may be inherent in the packet, e.g., in a higher-layer protocol or associated to other physical properties such as the precise time (and radio channel) of reception of the packet. This may generally be done once, at or near the source.

The PRF may replicate these packets into multiple DETNET member flows and may send them along multiple different paths to the destination(s).

The PEF may eliminate duplicate packets of a DETNET flow, e.g., based on the sequencing information and a history of received packets. The output of the PEF is always a single packet. This may be done at any DETNET node along the path to save network resources further downstream, for example, if multiple replication points exist. But the most common case is to perform this operation at the very edge of the DETNET network, e.g., in or near the receiver.

The POF may use the sequencing information to reorder a DETNET flow's packets that are received out of order.

According to some examples, in order to perform PREOF, the DETNET service layer requires the used data plane (between DETNET nodes) to include sequencing information and/or a service label (S-label).

Based on time, resource reservation, and policy enforcement by distributed shapers, DETNET provides the capability to carry specified unicast or multicast data streams for real-time applications with extremely low data loss rates and bounded latency, e.g., so as to support time-sensitive and mission-critical applications on a converged enterprise infrastructure.

Wireless operates on a shared medium, and transmissions cannot be fully deterministic due to uncontrolled interferences, including self-induced multipath fading. IETF Reliable and Available Wireless (RAW) is an effort to provide DETNET along a path that includes at least one wireless element. RAW ensures high reliability and availability for internet protocol (IP) connectivity over a wireless medium. The wireless medium presents significant challenges to achieve deterministic properties such as low packet error rate, bounded consecutive losses, and bounded latency. RAW extends the IETF DETNET Working Group (WG) concepts to guarantee high reliability and availability for an IP network utilizing scheduled wireless segments and other media, e.g., frequency and/or time-sharing physical media resources with stochastic traffic: IEEE Std. 802.15.4 time slotted channel hopping (TSCH), Third Generation Partnership Project (3GPP) 5G ultra-reliable low latency communications (URLLC), IEEE 802.11ax/be, and L-band Digital Aeronautical Communications System (LDACS), etc. Similar to DETNET, RAW technologies aim at staying abstract to the radio layers underneath, addressing the Layer 3 aspects in support of applications requiring high reliability and availability.

The RAW architecture framework (e.g., see [3] P. Thubert (Ed.), "Reliable and Available Wireless Architecture/Framework," draft-ietf-raw-architecture-04, March2022) may include main RAW operation(s) such as discussed in the following. RAW distinguishes between long and short forwarding time scales, where the long time scale is used for route computation and the short time scale is rather used for per-packet forwarding decisions. RAW operates within the Network Plane at the forwarding time scale on one DETNET flow over a complex path called a Track. The Track may be pre-established and installed by means outside of the scope of RAW; the track may be strict or loose depending on whether each or just a subset of the hops are observed and controlled by RAW.

The RAW architecture is structured as an OODA Loop including the following steps: Observe, Orient, Decide, Act (OODA). 'Observe' refers to Network Plane measurement protocols for Operations, Administration and Maintenance (OAM) observing some or all hops along a track as well as the end-to-end packet delivery. 'Orient' refers to controller plane elements reporting the links statistics to a Path Computation Element (PCE) in a centralized controller that computes and installs the tracks and provides meta data to orient the routing decision. 'Decide' refers to a runtime distributed Path Selection Engine (PSE) that decides which sub-track to use for the next packet(s) that are routed along the track. 'Act' refers to packet (hybrid) automatic repeat request (ARQ), replication, elimination and ordering data-plane actions that operate at the DETNET Service Layer to increase the reliability of the end-to-end transmission. The RAW architecture also covers in-situ signaling when the decision is acted upon by a node that is on the path down the track from the PSE.

The overall OODA loop optimizes the use of redundancy to achieve the required reliability and availability at the Service Level Agreement (SLA) while minimizing the use of constrained resources such as spectrum and battery.

As explained above, RAW separates the path computation time scale at which a complex path is recomputed from the path selection time scale at which the forwarding decision is taken for one or a few packets. RAW operates at the path selection time scale. The RAW problem is to decide, amongst the alternative solutions proposed by the Path Computation Element (PCE), which solution will be used for each packet to provide a reliable and available service while minimizing the waste of constrained resources. To that effect, RAW defines the PSE that is the counter-part of the PCE to perform rapid local adjustments of the forwarding tables within the diversity that the PCE has selected for the Track. The PSE enables to exploit the richer forwarding capabilities with packet (hybrid) ARQ, replication, elimination and ordering (PAREO), and scheduled transmissions at a faster time scale.

As introduced above, a track may refer to a networking graph that can be followed to transport packets with equivalent treatment; as opposed to the definition of a path above, a "track" is not necessarily linear. A track may contain multiple paths that may fork and rejoin, for instance to enable the RAW PAREO operations.

In DETNET terms, a track may have the following properties: (i) a track has one Ingress node and one Egress node, which operate as DETNET Edge nodes; (ii) a track is reversible, meaning that packets can be routed against the flow of data packets, e.g., to carry OAM measurements or control messages, back to the ingress; (iii) the vertices of the track are DETNET relay nodes that operate at the DETNET service sublayer and provide the PAREO functions; and (iv) the topological edges of the graph are serial sequences of DETNET transit nodes that operate at the DETNET forwarding sublayer.

A sub-track is a track within a track. The RAW PSE may select a sub-track on a per-packet or a per group of packets basis to provide the desired reliability for the transported flows.

The 3GPP specifications (e.g., up to Release 18) of 5G include some support for time sensitive communications (TSC) and reliable networks. It is noted that some of the available options are described in 3GPP TS 23.501 [6] and draft-ietf-raw-technologies [5] and are summarized below for background.

DETNET is the technology to support time-sensitive communications at the internet protocol (IP) layer. 3GPP Release 18 includes a study, "New SID: Extensions to the TSC Framework to support DETNET", 3GPP SP-211633 [7], on whether and how to enable 3GPP support for DETNET such that a mapping is provided between DETNET and 5G.

The support for DETNET is considered to be added via the TSC framework introduced for 3GPP Release 17. The study includes what information needs to be exposed by the 5G System and the translation of DETNET flow specification to 5G quality of service (QoS) parameters. It is noted that TSN is the primary subnetwork technology for DETNET. Thus, the DETNET over TSN work (e.g., see [14] RFC 9023), can be leveraged via the TSN support built in 5G.

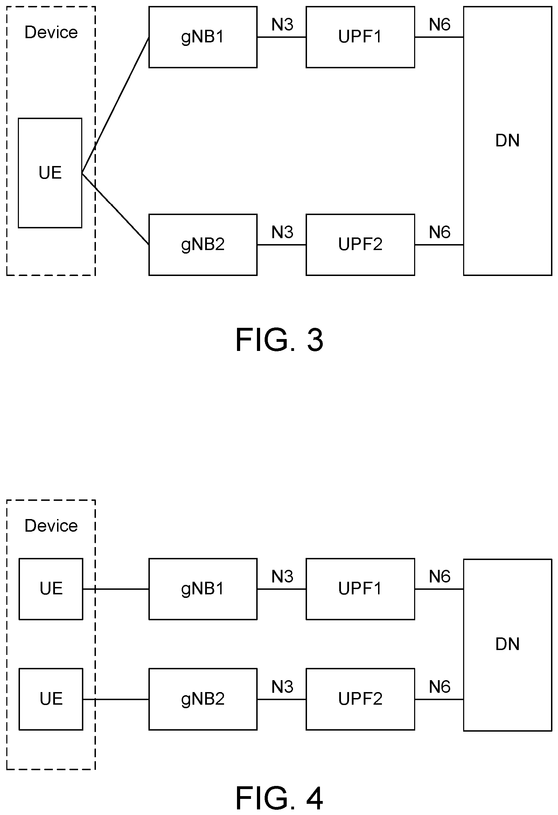

Redundancy architectures were specified to provide reliability against any kind of failure on the radio link or nodes in the RAN and the core network. Redundant user plane paths can be provided based on the dual connectivity architecture, where the UE sets up two PDU sessions towards the same data network, and the 5G system makes the paths of the two PDU sessions independent as illustrated in FIG. 3. As shown in the example of FIG. 3, there are two PDU sessions involved: the first spans from the UE via gNB1 to UPF1, acting as the first PDU session anchor, while the second spans from the UE via gNB2 to UPF2, acting as second the PDU session anchor. The independent paths may continue beyond the 3GPP network. It is not currently defined or specified how to configure and use the redundant paths, nor is it defined how to integrate the internal 3GPP network with an external network while providing reliability guarantees.

An alternative solution is that multiple UEs per device are used for user plane redundancy, as illustrated in the example of FIG. 4. As shown in the example of FIG. 4, each UE may set up a PDU session. The 5GS ensures that those PDU sessions of the different UEs are handled independently internal to the 5GS. There is no single point of failure in this example. Again, it is not currently specified or defined how to configure and use the redundant paths.

In addition to the previously described scenarios, consideration may be given to additional reliability that can be provided by also using non-3GPP access technologies as one of the access networks (ANs) used in the aforementioned schema.

It should also be noted that the Access Traffic Steering, Switching & Splitting (ATSSS) features allow the UE to have a Multi-Access protocol data unit (MA PDU) spanning more than one access link (e.g., one 3GPP access and one non-3GPP access). This feature can allow for dynamically using multiple radio access technologies simultaneously (e.g., 5G, WiFi). However, it does not provide the flexible traffic steering that DETNET/RAW uses, across access, backhaul, and core networks.

There are several use cases (e.g., see CJ. Bernardos (Ed.), "RAW use cases," draft-ietf-raw-use-cases-05, February 2022 [2]) where reliability and availability might be key demands from a user device connected to a mobile network. Applications such as eXtended Reality (XR) or industrial manufacturing are some use cases examples, but other examples are also possible. In these environments, UEs may demand strict and predictable behavior, e.g., in terms of latency, resilience, availability and/or throughput.

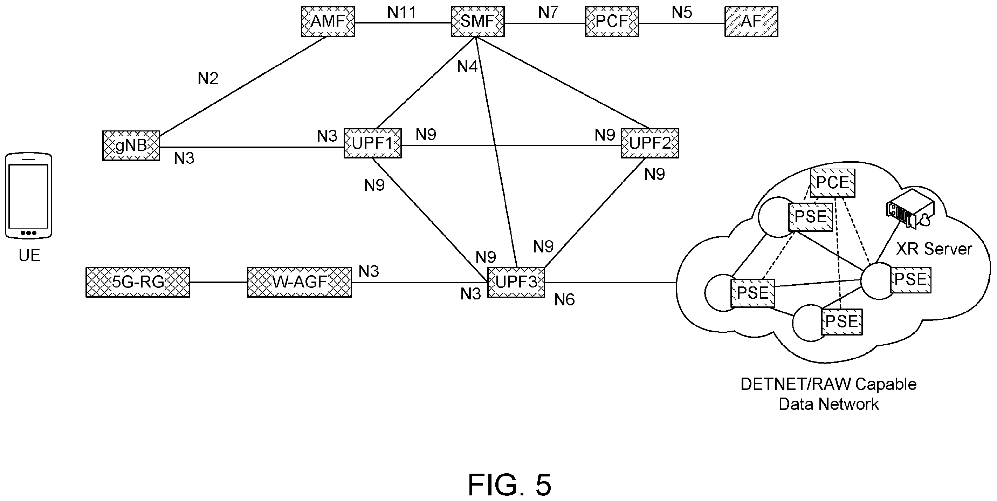

FIG. 5 shows an example of a communication system or scenario that includes a UE connected to a 5G network, and involving a communication with an XR server, according to an embodiment. In the example of FIG. 5, the UE may be running an XR application (e.g., which may require connectivity with strict QoS and reliability to an XR server); however, the UE may be running another type of application.

Current 3GPP specifications support some simple and rigid schema to make use of different access networks, either simultaneously (e.g., dual link approaches) or sequentially (e.g., ATSSS). Those approaches are limited as, for example, they do not support using PREOF or PAREO solutions, e.g., to maximize the gains of having multiple possible paths (not limited to the UE-UPF segment, but only covering the backhaul of the network, and even the external data networks connected to the mobile network). Current standardized solutions do not maximize the gains from path diversity at both the access (including 3GPP and non-3GPP links) and transport/backhaul (or even considering the external data network). RAW/DETNET approaches might make use of splitting, merging packets adapting to both the requirements of the traffic and the current conditions of the network, also benefiting from the wireless media characteristics (e.g., broadcast nature of wireless transmission). Examples of powerful traffic steering policies not supported today may include: (i) leveraging path diversity in the access plus backhaul for non-multipath transmission control protocol (MPTCP) traffic flows, *(ii)* reacting on a per packet time frame to link variations, and/or *(iii)* enabling network coding approaches to leverage path diversity, etc.

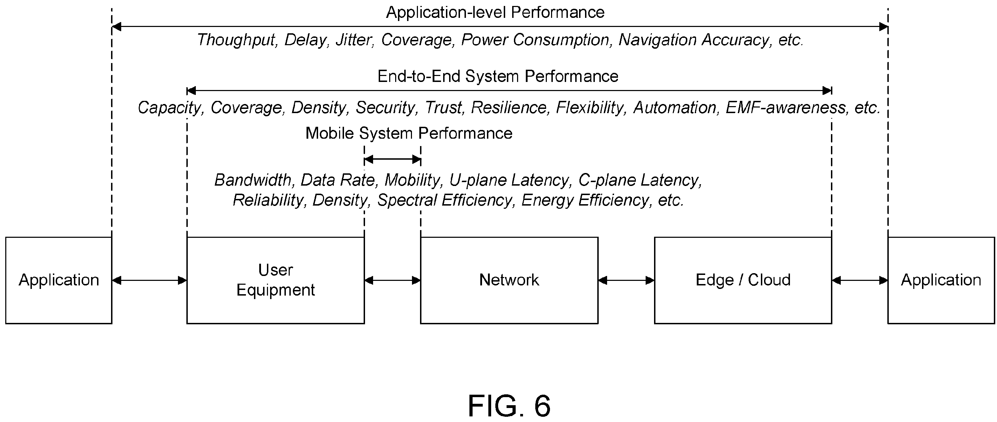

FIG. 6 is a diagram illustrating different views depending on the considered segments, such as application-level performance, end-to-end system performance, and mobile system performance, according to an embodiment. FIG. 6 shows the importance of the application-level performance, and how this takes into consideration the various elements system, such as the UE, the network, edge/cloud and application(s). Even in deployments where the access link provides enough QoS (e.g., 5G NR), it might be the case that the access is not the bottleneck. Besides, it may also be important to consider handover failures on the RAN that could involve degrading the QoS performance. Taking all this into account, it becomes clear that it is important to consider not only the capabilities of the UE and the mobile network the UE is connected to, but also the capabilities of the data network where the other communication end-point resides. If that data network has DETNET/RAW capabilities, it can be beneficial to define mechanisms that make it possible to ensure the QoS and reliability of the application flow(s) end-to-end. Mechanisms such as the Service Enabler Architecture Layer for Verticals (SEAL) can be extended to request the 5GS to provide a given QoS and reliability end-to-end, which could then result in DETNET/RAW support at either the 5GS and also including external data networks.

It is noted that 3GPP is responsible for the specification of the control and data plane mechanisms used within the 3GPP network. Meanwhile, the IETF DETNET and RAW WGs are responsible for the definition of data and control plane mechanisms to support deterministic networking in wired and wireless multi-hop networks, for example in use in the Data Network shown in FIG. 5, which is connected to a mobile 5G network. FIG. 5 shows a UE that can potentially simultaneously connect to two different Access Networks (ANs): a 3GPP network and a non-3GPP wireline network. It is noted that different combinations of 3GPP and non-3GPP ANs are possible.

Certain example embodiments described herein can provide extensions and/or improvements to both control and data plane mechanisms in mobile networks to facilitate end-to-end time sensitive and reliable communications in mobile communication systems, taking the non-limiting example of 3GPP 5G, and potentially also reaching external components outside of the mobile network (e.g., external data networks). For instance, some embodiments may address how to extend ATSSS to exploit wireless and wired links diversity in the RAN and/or the backhaul and/or the external data networks. Examples of mechanisms to support when handling UE's traffic may include PREOF, PAREO, and network coding. In addition, for example, some embodiments may address what is required to extend GTP to support the seamless integration of the traffic management solutions within the mobile network domain and the solutions in the external data networks. In certain embodiments, it may be assumed, as a non-limiting starting point, that the external network uses IETF (e.g., DETNET and/or RAW) mechanisms to provide QoS and reliability. Further, some embodiments may address how to enable awareness and coordination of the mechanisms in place in the mobile network and the mechanisms used in an external data network, so QoS and reliability guarantees are provided end-to-end.

It should be noted that the RAW/DETNET proposed extensions can run on (e.g., run only on) the mobile network (e.g., the 5GS), but they can also interact with RAW/DETNET protocols running on external data networks, enabling end-to-end QoS and reliability management.

Certain embodiments may provide and/or define new interactions and protocol extensions at least to 3GPP and/or IETF protocols, for example, to enable UE's app flow(s) to benefit from end-to-end time sensitive and reliability guarantees. An embodiment may provide apparatuses and/or methods to extend ATSSS to support additional ways of benefiting from links' diversity in the access and in the backhaul transport network, and also in the external data network, looking holistically end-to-end at the guarantees.

Current 3GPP specifications consider two steering functionalities for Access Traffic Steering, Switching and Splitting (ATSSS): MultiPath TCP (MPTCP) and ATSSS Lower Layer (ATSSS-LL). As discussed in the following, some example embodiments may extend the support by adding a new DETNET/RAW functionality.

In an embodiment, the DETNET/RAW functionality may enable a UE to use multiple Access Networks in a MA PDU session, without requiring MPTCP and supporting splitting and/or switching traffic, as well as possibly using other approaches specified by IETF DETNET/RAW, such as Packet Replication, Elimination, and Ordering Functions (PREOF), Packet (hybrid) ARQ, Replication, Elimination and Ordering (PAREO) or even network coding. As such, some example embodiments can extend ATSSS to support new and richer mechanisms to exploit links' diversity in the access part, the backhaul transport, and even external data networks. As a result, certain embodiments may extend ATSSS, e.g., to support time sensitive and reliable communications.

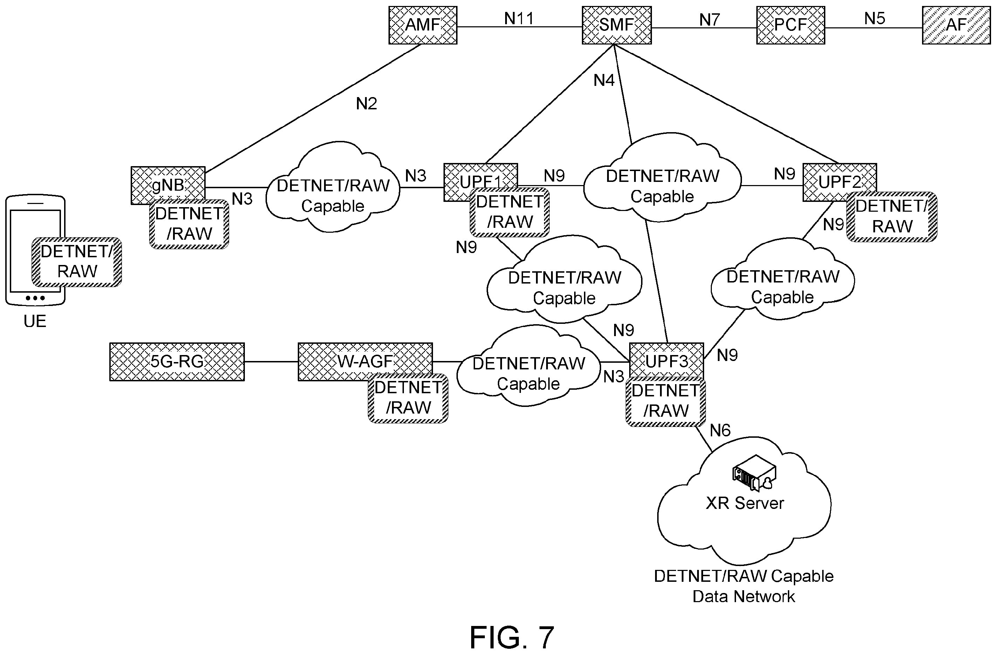

FIG. 7 illustrates an example of the extended 3GPP mobile architecture, according to an example embodiment. In the example of FIG. 7, the components that include the new DETNET/RAW functionality are labeled with "DETNET/RAW". For example, in the example of FIG. 7, at least the UE, gNB, UPF1, UPF2, UPF3, and/or W-AGF may include the new DETNET/RAW functionality. In some embodiments, the RAW functionality may be expected, for example, in case the backhaul connectivity is realized by wireless links. It is noted that, conceptually RAW may be viewed as a superset of DETNET, and in general may refer to protocols designed to enable time sensitive and reliable communications in heterogeneous wired and/or wireless environments.

As illustrated in the example of FIG. 7, certain example embodiments may add a new DETNET/RAW functionality on the UE (or 5G-residential gateway (RG)), the PDU Session Anchor (PSA) user plane function (UPF), intermediate UPFs, gNBs, wireline access gateway function (W-AGF), non-3GPP interworking function (N3IWF) and/or trusted non-3GPP gateway function (TNGF) nodes, mainly impacting the layers below the application. In certain embodiments, the new DETNET/RAW functionalities can be hosted on one or more of: the UE, the Access Network nodes (e.g., gNB and W-AGF), the intermediate UPFs, and/or the PSA UPF.

In certain embodiments, on the UE, the new DETNET/RAW functionality may cause or configure the UE to perform one or more of the following procedures. According to an embodiment, the UE may receive, e.g., from the session management function (SMF) and/or policy control function (PCF) an extended set of ATSSS rules, indicating how to perform traffic flow identification, marking and/or forwarding, applying PREOF/PAREO. It is noted that, in some embodiments, DETNET/RAW rules can be constructed at the PCF and then may be delivered to the SMF. The initial instructions to the PCF can be delivered by an application function (AF) responsible for managing DETNET/RAW operations. The SMF may then take required action to implement the (PCC) rules (e.g., select the right UPFs, traffic steering modes, or register to a set of NWDAF instances, etc.). In one embodiment, the UE may implement IETF DETNET/RAW mechanisms with the other DETNET/RAW nodes of the network, such as with the access network node (e.g., a gNB, or W-AGF), the UPFs and any other backhaul node interconnecting them (e.g., realizing the connectivity required for the N3/N6 interfaces). This may be to provide the QoS and reliability required or requested by the application flow(s). Optionally, in an embodiment, the UE may subscribe to the 3GPP analytics service, e.g., to obtain relevant metrics and implement the given ATSSS rules in order to meet the demanded or requested QoS and reliability. This might include new events relevant for time sensitive and available communications. Several network data analytics function (NWDAF) instances may be used for the purpose of DENET/RAW. Some examples of relevant metrics may include: (i) User Data Congestion information; (ii) Session Management Congestion Control Experience; (iii) WLAN performance (e.g., if ATSSS uses WLAN RATs such as WiFi); (iv) Slice Load level information; and/or (v) UE mobility information (e.g., see 3GPP, TS 23.288 V 17.5.0 (2022-06) "Architecture enhancements for 5G System (5GS) to support network data analytics services" Rel. 17 [12]). Some QoS measurements for latency (e.g., one-way/two-way between UE, RAN, and UPF) can also be collected by SMF/UPF from NG-RAN/UE which can be used by DETNET/RAW components. In some embodiments, the UE may encapsulate the traffic to the Access Network node, adding the required metadata (as indicated by the SMF/PCF). Multiple types of encapsulation may be supported, such as MPLS over user datagram protocol (UDP), general packet radio service (GPRS) tunneling protocol (GTP) user plane (GTPv1-U), generic routing encapsulation (GRE), and/or zero encapsulation via implicit encapsulation. It is noted that GTPv1-U may use a new extension to support carrying part of the required metadata (e.g., the S-label, as described below). Additionally, in some embodiments, new OAM mechanisms might also be added to GTPv1-U, to accelerate the reaction time to adapt to the network conditions.

According to certain embodiments, on the access network node(s) (e.g., gNB and W-AGF), the new DETNET/RAW functionality may cause the access network node(s) to perform one or more of the following procedures. In an embodiment, the access network nodes may implement IETF DETNET/RAW mechanisms with the other DETNET/RAW nodes of the network, such as with the UE, the UPFs and any other backhaul node interconnecting them (e.g., realizing the connectivity required for the N3/N6 interfaces). This may be used to provide the QoS and reliability required or requested by the application flow(s). According to one embodiment, if a different encapsulation method is used between the UE and the access network node, and within the backhaul, the required translation may be performed by this node(s). Optionally, in an embodiment, the access node(s) may subscribe to the 3GPP analytics service, e.g., to obtain relevant metrics and implement the given ATSSS rules in order to meet the demanded or requested QoS and reliability. This might include new events relevant for time sensitive and available communications.

According to certain embodiments, on the intermediate UPF(s), the new DETNET/RAW functionality may cause the intermediate UPF(s) to perform one or more of the following procedures. In an embodiment, the intermediate UPF(s) may implement IETF DETNET/RAW mechanisms with the other DETNET/RAW nodes of the network, such as with the access network node(s) (e.g., a gNB, or W-AGF), the UPF(s) and any other backhaul node interconnecting them (e.g., realizing the connectivity required for the N3/N6 interfaces). This may be used to provide the QoS and reliability required or requested by the application flow(s). Optionally, in some embodiments, the intermediate UPF(s) may subscribe to the 3GPP analytics service, e.g., to obtain relevant metrics and implement the given ATSSS rules in order to meet the demanded or requested QoS and reliability. This might include new events relevant for time sensitive and available communications.

According to certain embodiments, on the PSA UPF, the new DETNET/RAW functionality may cause the PSA UPF to perform one or more of the following procedures. In an embodiment, the PSA UPF may implement IETF DETNET/RAW mechanisms with the other DETNET/RAW nodes of the network, such as with the UE, the UPF(s) and any other backhaul node interconnecting them (e.g., realizing the connectivity required for the N3/N6 interfaces). This may be used to provide the QoS and reliability required or requested by the application flow(s). According to an embodiment, the PSA UPF may decapsulate the packets and deliver them to the external Data Network. If the external data network is also DETNET/RAW capable, end-to-end time sensitive and reliability mechanisms might be in place, decapsulation might not be required, leveraging IETF DETNET/RAW mechanisms. This may utilize extensions between an AF in the external data network and the SMF. It is noted that, if the AF is hosted outside the 3GPP network, then it may first relay information via the network exposure function (NEF) to the PCF. The PCF may then generate required instruction for the SMF to follow. The PCF can also directly instruct UE to follow some rules regarding DETNET/RAW, e.g., via non-access stratum (NAS) packet switch (PS) signaling.

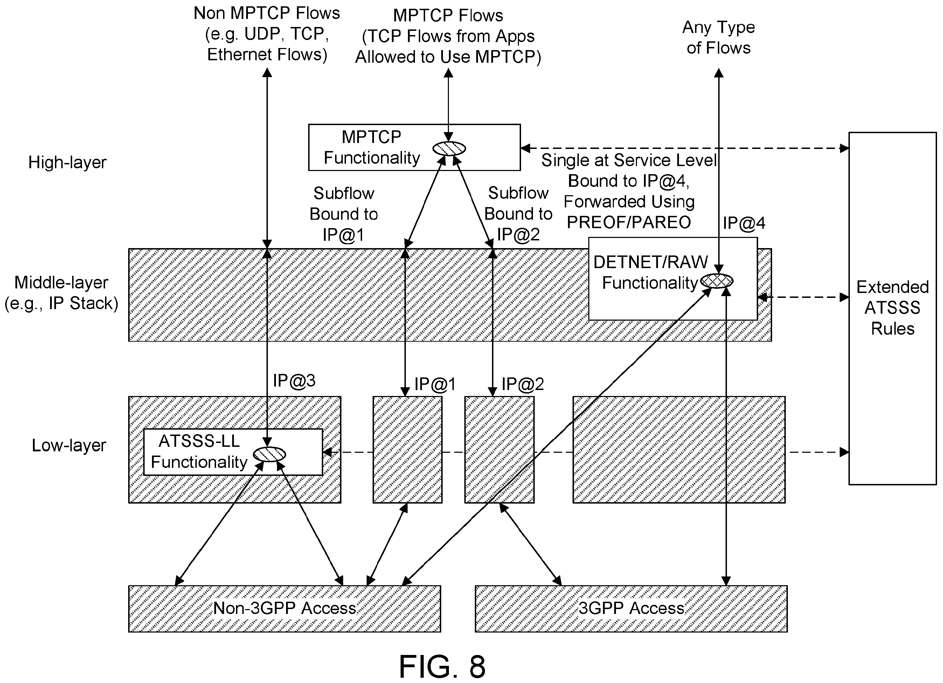

FIG. 8 illustrates an example diagram of the UE model when extended with the new DETNET/RAW steering functionality, according to some embodiments. As depicted in the example of FIG. 8, in an embodiment, the DETNET/RAW steering functionality may be included at the middle layer (e.g., IP stack).

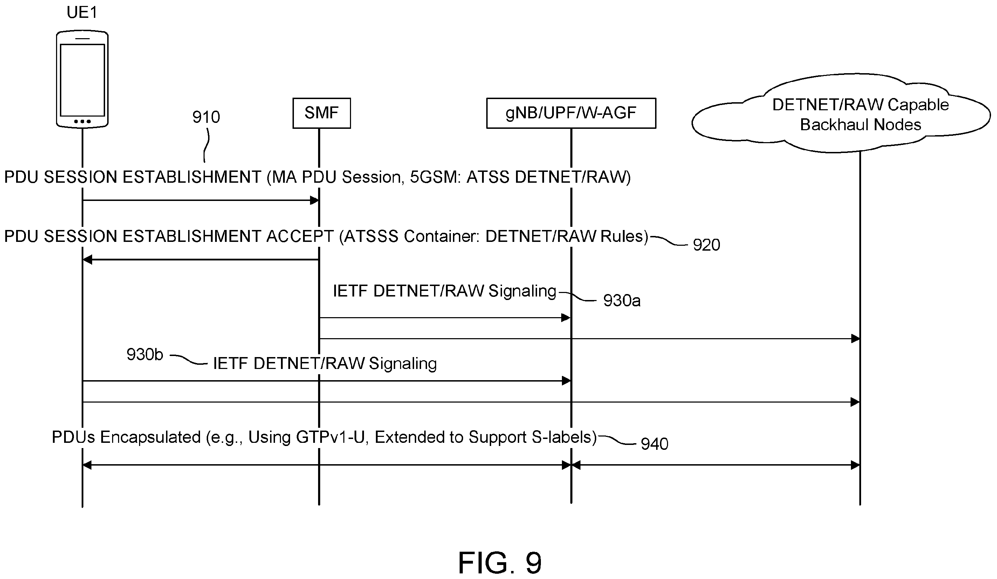

FIG. 9 illustrates an example signaling diagram, according to certain example embodiments. For example, in one embodiment, the signaling depicted in the example of FIG> 9 may be carried out in or as a part of the system illustrated in FIG. 7 and discussed above. As illustrated in the example of FIG. 9, at 910, the UE (e.g., UE1) may initiate a MA PDU session establishment. For example, the UE may initiate the MA PDU session establishment by sending (e.g., to a SMF) a message, such as a PDU session establishment message, that may be extended to include the new ATSSS DETNET/RAW steering functionality as a capability of the UE.

As further illustrated in the example of FIG. 9, at 920, the SMF may send a PDU session establishment accept message to the UE. For example, the SMF, aware of the DETNET/RAW capabilities of 3GPP network, may include in the PDU session establishment accept, an extended ATSSS container that includes the rules to manage the traffic of the UE demanding or requesting QoS and reliability. Some non-limiting examples of the extensions of the ATSSS rules may include (e.g., defined in TS 24.193 [9]): a new steering functionality value for the access selection descriptor, set to DETNET/RAW, new steering modes (e.g., PREOF and PAREO that can include network coding aspects as well) in the access selection descriptor, a new parameter conveying the S-label to be included in the service layer metadata of the packets matching the service data flow, and/or a new container of PREOF and PAREO rules and/or policies to be applied to the traffic matching the service data flow. If the SMF is in charge of configuring the DETNET/RAW-enabled nodes (e.g., at service and forwarding layers), these policies may be consistent with the configured in the rest of the nodes.

In the example of FIG. 9, at 930, the network may be configured to provide the required or requested QoS and reliability to the UE application flow(s). This can be done at least in two different ways: as shown at 930a, by the SMF using the IETF DETNET/RAW mechanisms (extending N4) to configure intermediate nodes how to compute and use paths using PREOF/PAREO mechanisms; or, as shown at 930b, by the UE using the IETF DETNET/RAW mechanisms to configure intermediate nodes how to compute and use paths using PREOF/PAREO mechanisms. It is noted that these are just two examples of possible mechanisms and other mechanisms are possible. As such, embodiments should not be considered to be merely limited to these examples.

As further depicted in the example of FIG. 9, at 940, the UE application traffic can be forwarded within the network. In an embodiment, at 940, the UE may encapsulate the traffic in accordance with the rules received from the SMF. In one example, this encapsulation may be enriched with (e.g., adding or incorporating) metadata (e.g., as provided by IETF DETNET (RFC 8938) [11]), such as with a sequence number (e.g., supported by GTPv1-U, see 3GPP TS 29.281 [10]) and/or service label (S-label), which may be added to GTPv1-U. Different encapsulation mechanisms can be used to include this metadata between the UE and the Access Network (e.g., gNB, W-AGF), such as GTPv1-U, GRE, MPLS over UDP, etc. The same may apply between the access network node and the UPFs, although GTPv1-U may be the currently most commonly used approach. If different encapsulation approaches are used in the access and in the backhaul, the access network node may perform the translation, ensuring that the metadata is not affected. In some embodiments, the encapsulating 940 may include the sending and/or receiving of the UE application traffic to/from the UE, the access nodes and/or backhaul nodes.

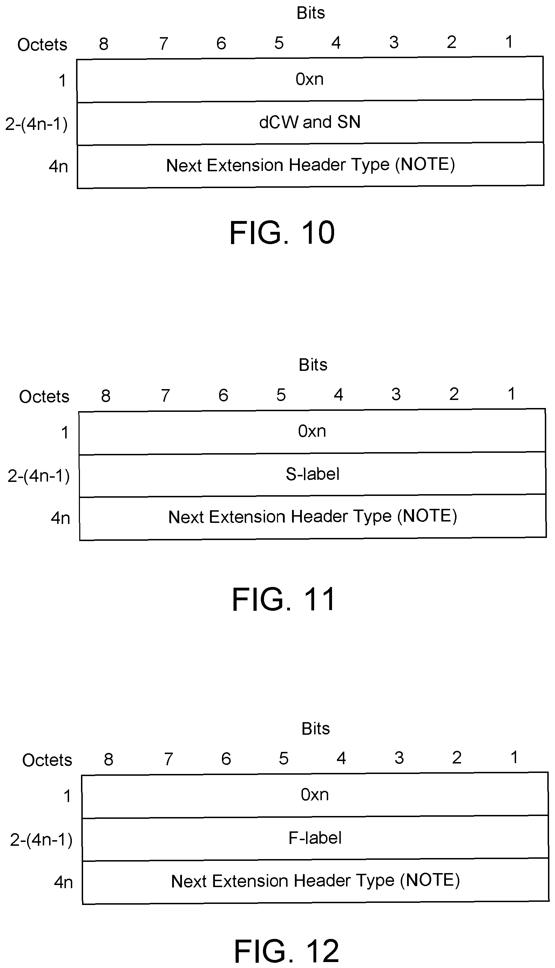

According to certain embodiments, at least some of the methods described herein may utilize or apply extensions to GTPv1-U, e.g., in the form of new extension headers. FIG. 10 illustrates one example of an extension header that includes DETNET Control Word (dCW) and DETNET Sequence Number (SN), according to certain embodiments. For example, in an embodiment, the extension may contain a DETNET Control Word (dCW) and Sequence Number provisioned by the SMF, e.g., to be used at the service layer when performing PREOF or PAREO. The dCW may contain sequencing information for packet replication and duplicate elimination purposes (e.g., as defined in RFC 8964 [13]). The first 4 bits may be set to 0, and the rest may contain the sequence number (0, 16 and 28 bit length are supported). The value of this field may be set to '0' if no other extension header follows.

FIG. 11 illustrates an example of an extension header that includes a DETNET service label, according to certain embodiments. For example, in an embodiment, the extension may contain the DETNET service label (S-label) provisioned by the SMF, e.g., to be used at the service layer when performing PREOF or PAREO. The DETNET service label may be used between DETNET nodes that implement the DETNET service sub-layer functions (e.g., as defined in RFC 8964 [13]). An S-Label may be used to identify a DETNET flow at the DETNET service sub-layer at a receiving DETNET node. The S-Label may be used, for example, to indicate the required queue processing as well as the forwarding parameters. The value of this field may be set to '0' if no other extension header follows.

FIG. 12 illustrates an example of an extension header that includes DETNET MPLS forwarding label(s), according to certain embodiments. For example, in an embodiment, the extension may contain the DETNET MPLS forwarding label(s) (F-Label) used to direct the packet along the Label Switched Path (LSP) to the next DETNET service sub-layer processing node along the path. The value of this field may be set to '0' if no other extension header follows.

It is noted that the extension headers illustrated in the examples of FIGs. 10-12 may be combined or modified in any suitable manner, according to certain embodiments.

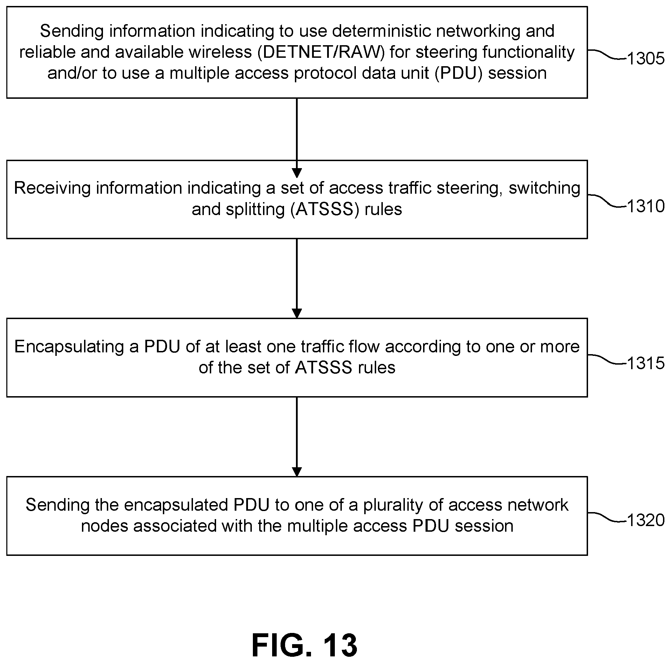

FIG. 13 is an example flow diagram illustrating an example method of providing reliability and/or availability in mobile networks, according to some example embodiments. The example method of FIG. 13 and accompanying disclosures herein may be considered a generalization or synthetization of the various disclosures discussed above. For convenience and simplicity of exposition, the example of FIG. 13 may be described with reference to the architecture or system described above with respect to FIGs. 1A-1D and/or FIG. 7, for instance. However, the example method depicted in FIG. 13 may be carried out using different architectures as well. According to some embodiments, the method of FIG. 13 may be implemented by a UE or WTRU, such as the WTRU 102 described in the foregoing. For instance, in one embodiment, the method of FIG. 13 may be implemented by UE1 as illustrated in FIG. 9 and discussed above. As such, the method of FIG. 13 may be modified to include any of the steps, procedures and/or details illustrated in the examples of FIG. 7 and/or FIG. 9. Moreover, it is noted that the method and/or blocks of FIG. 13 may be modified to include, or to be replaced by, any one or more of the procedures or blocks discussed elsewhere herein. As such, one of ordinary skill in the art would understand that FIG. 13 is provided as one example and modifications thereto are possible while remaining within the scope of certain example embodiments.

As illustrated in the example of FIG. 13, the method may include, at 1305, sending a first message that may include or indicate first information indicating to use deterministic networking and reliable and available wireless (DETNET/RAW) for steering functionality and/or to use a multiple access protocol data unit (PDU) session. In an example embodiment, the first message may be a protocol data unit (PDU) session establishment message and/or the first message may be sent to a core network node, such as an SMF as depicted in FIG. 9.

In an embodiment, as shown in the example of FIG. 13, the method may include, at 1310, receiving a second message that may include or indicate second information indicating a set of access traffic steering, switching and splitting (ATSSS) rules. For example, the set of ATSSS rules may include one or more of Packet Replication, Elimination, and Ordering Functions (PREOF) and/or packet automatic repeat request, replication, elimination and ordering (PAREO) rules. In an example embodiment, the second message may be a PDU session establishment accept message and/or the second message may be received from a core network node, such as an SMF as depicted in FIG. 9.

According to one example embodiment, the ATSSS rules may be or may include an extended set of ATSSS rules and may include any one or more of: (1) PREOF and/or PAREO steering modes, (2) one or more parameters indicating a DETNET service label (S-label), and/or (3) a container of PREOF and/or PAREO policies to be applied to the at least one traffic flow.

As illustrated in the example of FIG. 13, at 1315, the method may include encapsulating a PDU of at least one traffic flow according to one or more of the set of ATSSS rules, which may include at least one of the PREOF and/or PAREO rules. In an embodiment, the at least one traffic flow may be or may include one or more PDUs associated with the multiple access PDU session. For example, in an embodiment, the encapsulating 1315 may include adding or otherwise incorporating metadata to the encapsulated PDU. According to some example embodiments, the metadata may include any one or more of: (1) a deterministic networking (DETNET) service label (S-Label), (2) DETNET sequencing information, (3) a DETNET sequence number, and/or (4) DETNET multiprotocol label switching (MPLS) forwarding label(s) (F-Label). In certain example embodiments, the encapsulating may include applying any one or more of the following encapsulation methods: multiprotocol label switching (MPLS) over user datagram protocol (UDP), general packet radio service (GPRS) tunneling protocol (GTP) user plane (GTPv1-U), generic routing encapsulation (GRE), and/or implicit encapsulation.

In an embodiment, as shown in the example of FIG. 13, the method may include, at 1320, sending the encapsulated PDU to one of a plurality of access network nodes associated with the multiple access PDU session. For example, according to some embodiments, the access network nodes may include a gNB, UPF, and/or an access gateway function (e.g., W-AGF) as shown in the example of FIG. 9.

In some embodiments, although not illustrated in the example of FIG. 13, the method may optionally include obtaining and/or receiving metrics from an analytics service or node. In one example embodiments, the method may optionally include implementing the ATSS rules to at least meet or achieve a requested quality of service (QoS) and reliability for the at least one traffic flow. For example, in an embodiment, the method may include subscribing to the analytics service and/or node to obtain or receive metrics and to implement the ATSSS rules to meet the requested quality of service (QoS) and reliability for the at least one traffic flow. According to an embodiment, the metrics may include, for example, any one or more of: (1) user data congestion information, (2) session management congestion control experience, (3) wireless local area network (WLAN) performance, (4) slice load level information, and/or (5) mobility information associated with the WTRU.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, 6 or means-plus-function claim format, and any claim without the terms "means for" is not so intended.

Although various embodiments have been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although some example embodiments are illustrated and described herein, the invention is not intended to just be limited to the details shown. Rather, various modifications and variations may be made in the details within the scope and range of the claims and without departing from the scope invention.

### REFERENCES

The following references may have been referred to hereinabove, each of which is incorporated herein by reference in its entirety:
[1] N. Finn et al., "Deterministic Networking Architecture," RFC 8655, October 2019.
[2] CJ. Bernardos (Ed.), "RAW use cases," draft-ietf-raw-use-cases-05, February 2022.
[3] P. Thubert (Ed.), "Reliable and Available Wireless Architecture/Framework," draft-ietf-raw-architecture-04, March2022.
[4] F. Theoleyre, et al., "Operations, Administration and Maintenance (OAM) features for RAW", draft-ietf-raw-oam-support-04, February 2022.
[5] P. Thubert (Ed.), "Reliable and Available Wireless Technologies," draft-ietf-raw-technologies-05, February 2022.
[6] 3GPP, TS 23.501: "System architecture for the 5G System (5GS)," Rel. 17, June 2022.
[7] 3GPP, "New SID: Extensions to the TSC Framework to support DETNET", 3GPP SP-211633, December 2021.
[8] 3GPP, TS 24.501: "Non-Access-Stratum (NAS) protocol for 5G System (5GS); Stage 3," Rel. 17, June 2022.
[9] 3GPP, TS 24.193: "5G System; Access Traffic Steering, Switching and Splitting (ATSSS); Stage 3," Rel. 17, June 2022.
[10] 3GPP, TS 29.281: "General Packet Radio System (GPRS) Tunnelling Protocol User Plane (GTPv1-U),", Rel. 17, June 2022.
[11] B. Varga (Ed.), "Deterministic Networking (DETNET) Data Plane Framework," RFC 8938, November 2020.
[12] 3GPP, TS 23.288 V 17.5.0 (2022-06) "Architecture enhancements for 5G System (5GS) to support network data analytics services" Rel. 17.
[13] B. Varga (Ed.), "Deterministic Networking (DetNet) Data Plane: MPLS," RFC 8964, January 2021.
[14] B. Varga (Ed.), "Deterministic Networking (DetNet) Data Plane: IP over IEEE 802.1 Time-Sensitive Networking (TSN)," RFC 9023, June 2021.

## Claims

1. A method, implemented by a wireless transmit/receive unit , WTRU, the method comprising:
sending a first message comprising first information indicating to use deterministic networking and reliable and available wireless , DETNET / RAW, for steering functionality and to use a multiple access protocol data unit , PDU, session;
receiving a second message comprising second information indicating a set of access traffic steering, switching and splitting , ATSSS, rules, wherein the set of ATSSS rules comprises any of packet replication, elimination, and ordering functions , PREOF, and packet automatic repeat request, replication, elimination and ordering , PAREO, rules;
encapsulating a PDU of at least one traffic flow according to one or more of the set of ATSSS rules, including any of the PREOF and PAREO rules; and
sending the encapsulated PDU to one of a plurality of access network nodes associated with the multiple access PDU session.

2. A wireless transmit/receive unit , WTRU, comprising:
circuitry, including any of a transmitter, receiver, processor and memory, the circuitry configured to:
send a first message comprising first information indicating to use deterministic networking and reliable and available wireless , DETNET / RAW, for steering functionality and to use a multiple access protocol data unit , PDU, session;
receive a second message comprising second information indicating a set of access traffic steering, switching and splitting , ATSSS, rules, wherein the set of ATSSS rules comprises any of packet replication, elimination, and ordering functions , PREOF, and packet automatic repeat request, replication, elimination and ordering , PAREO, rules;
encapsulate a PDU of at least one traffic flow according to one or more of the set of ATSSS rules, including any of the PREOF and PAREO rules; and
send the encapsulated PDU to one of a plurality of access network nodes associated with the multiple access PDU session.

3. The method of claim 1, or the WTRU of claim 2, wherein the ATSSS rules are an extended set of ATSSS rules and comprise any of:
one or more parameters indicating a deterministic networking , DETNET, service label , S-label; and/or
a container of PREOF or PAREO policies to be applied to the at least one traffic flow.

4. The method of any of claims 1 and 3, wherein the encapsulating comprises adding metadata to the encapsulated PDU.

5. The WTRU of any of claims 2-3, wherein the circuitry is configured to add metadata to the encapsulated PDU.

6. The method of claim 4, or the WTRU of claim 5, wherein the metadata comprises any of:
a deterministic networking , DETNET, service label , S-label;
DETNET sequencing information;
a DETNET sequence number; and
DETNET multiprotocol label switching , MPLS, forwarding label(s) , F-label.

7. The method of any of claims 1, 3-4 and 6, wherein the encapsulating comprises applying any of the following encapsulation methods:
multiprotocol label switching , MPLS, over user datagram protocol , UDP;
general packet radio service , GPRS, tunneling protocol , GTP, user plane , GTPV1-U;
generic routing encapsulation , GRE; and
implicit encapsulation.

8. The WTRU of any of claims 2-3 and 5-6, wherein, to encapsulate the PDU, the circuitry is configured to apply any of the following encapsulation methods:
multiprotocol label switching , MPLS, over user datagram protocol , UDP;
general packet radio service , GPRS, tunneling protocol , GTP, user plane , GTPv1-U;
generic routing encapsulation , GRE; and
implicit encapsulation.

9. The method of any of claims 1, 3-4 and 6-7, comprising:
subscribing to an analytics service to obtain metrics and implement the ATSSS rules to meet a requested quality of service , QoS, and reliability for the at least one traffic flow.

10. The WTRU of any of claims 2-3, 5-6 and 8, wherein the circuitry is configured to:
subscribe to an analytics service to obtain metrics and implement the ATSSS rules to meet a requested quality of service , QoS, and reliability for the at least one traffic flow.

11. The method of claim 9, or the WTRU of claim 10, wherein the metrics comprise any of:
user data congestion information;
session management congestion control experience;
wireless local area network , WLAN, performance;
slice load level information; and
mobility information associated with the WTRU.

12. The method of any of claims 1, 3-4, 6-7, 9 and 11, or the WTRU of any of claims 2-3, 5-6, 8 and 10-11, wherein:
the first message comprises a protocol data unit , PDU, session establishment message, and the second message comprises a PDU session establishment accept message.

13. The method of any of claims 1, 3-4, 6-7, 9 and 11-12, or the WTRU of any of claims 2-3, 5-6, 8 and 10-12, wherein the at least one traffic flow comprises one or more protocol data units (PDUs) associated with the multiple access PDU session.

14. The method of any of claims 1, 3-4, 6-7, 9 and 11-13, or the WTRU of any of claims 2-3, 5-6, 8 and 10-13, wherein the access network nodes comprise any of a gNB and an access gateway function.

15. A network element, comprising:
circuitry, including any of a transmitter, receiver, processor and memory, the circuitry configured to:
receive, from a wireless transmit/receive unit , WTRU, a first message comprising first information indicating to use deterministic networking and reliable and available wireless , DETNET/RAW, for steering functionality and to use a multiple access protocol data unit , PDU, session; and
send, to the WTRU, a second message comprising second information indicating a set of access traffic steering, switching and splitting (ATSSS) rules, wherein the set of ATSSS rules comprises any of packet replication, elimination, and ordering functions (PREOF) and packet automatic repeat request, replication, elimination and ordering (PAREO) rules.

## Patentansprüche

1. Verfahren, das durch eine Drahtlos-Sende- und -Empfangseinheit (Wireless Transmit/Receive Unit, WTRU) implementiert wird, wobei das Verfahren umfasst:
Senden einer ersten Nachricht, die erste Informationen umfasst, die angeben, Deterministic Networking and Reliable and Available Wireless (DETNET/RAW) für eine Steuerungsfunktionalität zu verwenden und eine Mehrfachzugriffs-Protokolldateneinheit (Protocol Data Unit, PDU)-Sitzung zu verwenden;
Empfangen einer zweiten Nachricht, die zweite Informationen umfasst, die einen Satz von Access Traffic Steering, Switching and Splitting (ATSSS)-Regeln angeben, wobei der Satz von ATSSS-Regeln beliebige von Packet Replication, Elimination and Ordering-Funktionen (PREOF) und Packet Automatic Repeat Request, Replication, Elimination and Ordering (PAREO)-Regeln umfasst;
Verkapseln einer PDU mindestens eines Verkehrsflusses gemäß einer oder mehreren des Satzes von ATSSS-Regeln, einschließlich beliebiger der PREOF und PAREO-Regeln; und
Senden der verkapselten PDU an einen von mehreren Zugangsnetzknoten, die mit der Mehrfachzugriffs-PDU-Sitzung verknüpft sind.

2. Drahtlos-Sende- und -Empfangseinheit (Wireless Transmit/Receive Unit, WTRU), umfassend:
eine Schaltung, die beliebige von einem Sender, einem Empfänger, einem Prozessor und einem Speicher umfassen kann, wobei die Schaltung eingerichtet ist zum:
Senden einer ersten Nachricht, die erste Informationen umfasst, die angeben, Deterministic Networking and Reliable and Available Wireless (DETNET/RAW) für eine Steuerungsfunktionalität zu verwenden und eine Mehrfachzugriffs-Protokolldateneinheit (Protocol Data Unit, PDU)-Sitzung zu verwenden;
Empfangen einer zweiten Nachricht, die zweite Informationen umfasst, die einen Satz von Access Traffic Steering, Switching and Splitting (ATSSS)-Regeln angeben, wobei der Satz von ATSSS-Regeln beliebige von Packet Replication, Elimination and Ordering-Funktionen (PREOF) und Packet Automatic Repeat Request, Replication, Elimination and Ordering (PAREO)-Regeln umfasst;
Verkapseln einer PDU mindestens eines Verkehrsflusses gemäß einer oder mehreren des Satzes von ATSSS-Regeln, einschließlich beliebiger der PREOF und PAREO-Regeln; und
Senden der verkapselten PDU an einen von mehreren Zugangsnetzknoten, die mit der Mehrfachzugriffs-PDU-Sitzung verknüpft sind.

3. Verfahren nach Anspruch 1 oder WTRU nach Anspruch 2, wobei die ATSSS-Regeln ein erweiterter Satz von ATSSS-Regeln sind und beliebiges von Folgendem umfassen:
beliebige von PREOF- und PAREO-Steuerungsmodi;
einen oder mehrere Parameter, die ein Deterministic Networking (DETNET)-Service-Label (S-Label) angeben; und/oder
einen Container mit PREOF oder PAREO-Richtlinien, die auf den mindestens einen Verkehrsfluss anzuwenden sind.

4. Verfahren nach einem der Ansprüche 1 und 3, wobei das Verkapseln das Hinzufügen von Metadaten zu der verkapselten PDU umfasst.

5. WTRU nach einem der Ansprüche 2-3, wobei die Schaltung dazu eingerichtet ist, der verkapselten PDU Metadaten hinzuzufügen.

6. Verfahren nach Anspruch 4 oder WTRU nach Anspruch 5, wobei die Metadaten beliebiges von Folgendem umfassen:
ein Deterministic Networking (DETNET)-Service-Label (S-Label);
DETNET-Sequenzierungsinformationen;
eine DETNET-Sequenznummer; und
ein oder mehrere DETNET-Multiprotocol Label Switching (MPLS)-Weiterleitungs (Forwarding, F)-Label.

7. Verfahren nach einem der Ansprüche 1, 3-4 und 6, wobei das Verkapseln das Anwenden beliebiger der folgenden Verkapselungsverfahren umfasst:
Multiprotocol Label Switching (MPLS) über User Datagram Protocol (UDP);
General Packet Radio Service (GPRS)-Tunneling Protocol (GTP)-User Plane (GTPV1-U);
Generic Routing Encapsulation (GRE); und
implizite Verkapselung.

8. WTRU nach einem der Ansprüche 2-3 und 5-6, wobei die Schaltung, zum Verkapseln der PDU, dazu eingerichtet ist, beliebige der folgenden Verkapselungsverfahren anzuwenden:
Multiprotocol Label Switching (MPLS) über User Datagram Protocol (UDP);
General Packet Radio Service (GPRS)-Tunneling Protocol (GTP)-User Plane (GTPV1-U);
Generic Routing Encapsulation (GRE); und
implizite Verkapselung.

9. Verfahren nach einem der Ansprüche 1, 3-4 und 6-7, umfassend:
Abonnieren eines Analysedienstes, um Messgrößen zu erhalten und die ATSSS-Regeln zu implementierten, um eine angeforderte Dienstgüte (Quality of Service, QoS) und Zuverlässigkeit für den mindestens einen Verkehrsfluss zu erfüllen.

10. WTRU nach einem der Ansprüche 2-3, 5-6 und 8, wobei die Schaltung eingerichtet ist zum:
Abonnieren eines Analysedienstes, um Messgrößen zu erhalten und die ATSSS-Regeln zu implementierten, um eine angeforderte Dienstgüte (Quality of Service, QoS) und Zuverlässigkeit für den mindestens einen Verkehrsfluss zu erfüllen.

11. Verfahren nach Anspruch 9 oder WTRU nach Anspruch 10, wobei die Messgrößen beliebiges von Folgendem umfassen:
Nutzerdatenüberlastungsinformationen;
Sitzungsmanagementüberlastungssteuerungserfahrungen;
Wireless Local Area Network (WLAN)-Leistung;
Slice-Lastpegelinformationen; und
Mobilitätsinformationen, die mit der WTRU verknüpft sind.

12. Verfahren nach einem der Ansprüche 1, 3-4, 6-7, 9 und 11 oder WTRU nach einem der Ansprüche 2-3, 5-6, 8 und 10-11, wobei:
die erste Nachricht eine Protokolldateneinheit (Protocol Data Unit, PDU)-Sitzungsaufbaunachricht umfasst,
und die zweite Nachricht eine PDU-Sitzungsaufbau-Akzeptanznachricht umfasst.

13. Verfahren nach einem der Ansprüche 1, 3-4, 6-7, 9 und 11-12 oder WTRU nach einem der Ansprüche 2-3, 5-6, 8 und 10-12, wobei der mindestens eine Verkehrsfluss eine oder mehrere Protokolldateneinheiten (PDUs) umfasst, die mit der Mehrfachzugriffs-PDU-Sitzung verknüpft sind.

14. Verfahren nach einem der Ansprüche 1, 3-4, 6-7, 9 und 11-13 oder WTRU nach einem der Ansprüche 2-3, 5-6, 8 und 10-13, wobei die Zugangsnetzknoten beliebige von einem gNB und einer Zugangsgateway-Funktion umfassen.

15. Netzwerkelement, umfassend:
eine Schaltung, die beliebige von einem Sender, einem Empfänger, einem Prozessor und einem Speicher umfassen kann, wobei die Schaltung eingerichtet ist zum:
Empfangen, von einer Drahtlos-Sende- und -Empfangseinheit (WTRU), einer ersten Nachricht, die erste Informationen umfasst, die angeben, Deterministic Networking and Reliable and Available Wireless (DETNET/RAW) für eine Steuerungsfunktionalität zu verwenden und eine Mehrfachzugriffs-Protokolldateneinheit (Protocol Data Unit, PDU)-Sitzung zu verwenden; und
Senden, an die WTRU, einer zweiten Nachricht, die zweite Informationen umfasst, die einen Satz von Access Traffic Steering, Switching and Splitting (ATSSS)-Regeln angeben, wobei der Satz von ATSSS-Regeln beliebige von Packet Replication, Elimination and Ordering-Funktionen (PREOF) und Packet Automatic Repeat Request, Replication, Elimination and Ordering (PAREO)-Regeln umfasst.

## Revendications

1. Procédé mis en œuvre par une unité émettrice-réceptrice sans fil, WTRU, le procédé comprenant :
l'envoi d'un premier message comprenant des premières informations indiquant d'utiliser un réseautage déterministe et un sans fil fiable et disponible, DETNET/RAW, pour une fonctionnalité de direction et d'utiliser une session d'unité de données de protocole, PDU, d'accès multiple ;
la réception d'un deuxième message comprenant des deuxièmes informations indiquant un ensemble de règles de direction, de commutation et de séparation de trafic d'accès, ATSSS, dans lequel l'ensemble de règles ATSSS comprend l'une quelconque de fonctions de réplication, d'élimination et d'ordonnancement de paquets, PREOF, et de règles de demande de répétition automatique, de réplication, d'élimination et d'ordonnancement de paquets, PAREO ;
l'encapsulation d'une PDU d'au moins un flux de trafic selon une ou plusieurs de l'ensemble de règles ATSSS, incluant l'une quelconque des règles PREOF et PAREO ; et
l'envoi de la PDU encapsulée à l'un d'une pluralité de nœuds de réseau d'accès associé à la session PDU d'accès multiple.

2. Unité émettrice-réceptrice sans fil, WTRU, comprenant :
une circuiterie incluant l'un quelconque parmi un émetteur, un récepteur, un processeur et une mémoire, la circuiterie étant configurée pour :
envoyer un premier message comprenant des premières informations indiquant d'utiliser un réseautage déterministe et un sans fil fiable et disponible, DETNET/RAW, pour une fonctionnalité de direction et d'utiliser une session d'unité de données de protocole, PDU, d'accès multiple ;
recevoir un deuxième message comprenant des deuxièmes informations indiquant un ensemble de règles de direction, de commutation et de séparation de trafic d'accès, ATSSS, dans laquelle l'ensemble de règles ATSSS comprend l'une quelconque de fonctions de réplication, d'élimination et d'ordonnancement de paquets, PREOF, et de règles de demande de répétition automatique, de réplication, d'élimination et d'ordonnancement de paquets, PAREO ;
encapsuler une PDU d'au moins un flux de trafic selon une ou plusieurs de l'ensemble de règles ATSSS, incluant l'une quelconque des règles PREOF et PAREO ; et
envoyer la PDU encapsulée à l'un d'une pluralité de nœuds de réseau d'accès associé à la session PDU d'accès multiple.

3. Procédé selon la revendication 1 ou WTRU selon la revendication 2, dans lequel les règles ATSS sont un ensemble étendu de règles ATSSS et comprennent l'un quelconque parmi :
l'un quelconque de modes de direction PREOF et PAREO ;
un ou plusieurs paramètres indiquant une étiquette de service, S-label, de réseautage déterministe, DETNET ; et/ou
un conteneur de politiques PREOF ou PAREO à appliquer à l'au moins un flux de trafic.

4. Procédé selon l'une quelconque des revendications 1 et 3, dans lequel l'encapsulation comprend l'ajout de métadonnées à la PDU encapsulée.

5. WTRU selon l'une quelconque des revendications 2 et 3, dans laquelle la circuiterie est configurée pour ajouter des métadonnées à la PDU encapsulée.

6. Procédé selon la revendication 4 ou WTRU selon la revendication 5, dans lequel les métadonnées comprennent l'un quelconque parmi :
une étiquette de service, S-label, de réseautage déterministe, DETNET ;
des informations de séquençage DETNET ;
un numéro de séquence DETNET ; et
une ou plusieurs étiquettes de transfert, F-label, de commutation d'étiquettes de protocoles multiples, MPLS, DETNET.

7. Procédé selon l'une quelconque des revendications 1, 3, 4 et 6, dans lequel encapsulation comprend l'application de l'un quelconque des procédés d'encapsulation suivants :
une commutation d'étiquettes de protocoles multiples, MPLS, sur un protocole de datagramme utilisateur, UDP ;
un plan utilisateur de protocole de tunnelisation de services radio à paquets généraux, GPRS, GTP, GTPV1-U ;
une encapsulation d'acheminement générique, GRE ; et
une encapsulation implicite.

8. WTRU selon l'une quelconque des revendications 2, 3, 5 et 6, dans laquelle, pour encapsuler la PDU, la circuiterie est configurée pour appliquer l'un quelconque des procédés d'encapsulation suivants :
une commutation d'étiquettes de protocoles multiples, MPLS, sur un protocole de datagramme utilisateur, UDP ;
un plan utilisateur de protocole de tunnelisation de services radio à paquets généraux, GPRS, GTP, GTPV1-U ;
une encapsulation d'acheminement générique, GRE ; et
une encapsulation implicite.

9. Procédé selon l'une quelconque des revendications 1, 3, 4, 6 et 7, comprenant :
l'abonnement à un service d'analyse pour obtenir des métriques et mettre en œuvre les règles ATSSS pour respecter une qualité de service, QoS, et une fiabilité demandées pour l'au moins un flux de trafic.

10. WTRU selon l'une quelconque des revendications 2, 3, 5, 6 et 8, dans laquelle la circuiterie est configurée pour :
s'abonner à un service d'analyse pour obtenir des métriques et mettre en œuvre les règles ATSSS pour respecter une qualité de service, QoS, et une fiabilité demandées pour l'au moins un flux de trafic.

11. Procédé selon la revendication 9 ou WTRU selon la revendication 10, dans lequel les métriques comprennent l'une quelconque parmi :
des informations de congestion de données utilisateur ;
une expérience de commande de congestion de gestion de session ;
une performance de réseau local sans fil, WLAN ;
des informations de niveau de charge de tranche ; et
des informations de mobilité associées à la WTRU.

12. Procédé selon l'une quelconque des revendications 1, 3, 4, 6, 7, 9 et 11 ou WTRU selon l'une quelconque des revendications 2, 3, 5, 6, 8, 10 et 11, dans lequel :
le premier message comprend un message d'établissement de session d'unité de données de protocole, PDU, et le deuxième message comprend un message d'acceptation d'établissement de sessions PDU.

13. Procédé selon l'une quelconque des revendications 1, 3, 4, 6, 7, 9, 11 et 12 ou WTRU selon l'une quelconque des revendications 2, 3, 5, 6, 8, et 10 à 12, dans lequel l'au moins un flux de trafic comprend une ou plusieurs unités de données de protocole (PDU) associées à la session PDU d'accès multiple.

14. Procédé selon l'une quelconque des revendications 1, 3, 4, 6, 7, 9, et 11 à 13 ou WTRU selon l'une quelconque des
revendications 2, 3, 5, 6, 8, et 10 à 13, dans lequel les nœuds de réseau d'accès comprennent l'un quelconque parmi un gNB et une fonction de passerelle d'accès.

15. Elément de réseau, comprenant :
une circuiterie incluant l'un quelconque parmi un émetteur, un récepteur, un processeur et une mémoire, la circuiterie étant configurée pour :
recevoir, depuis une unité émettrice-réceptrice sans fil, WTRU, un premier message comprenant des premières informations indiquant d'utiliser un réseautage déterministe et un sans fil fiable et disponible, DETNET/RAW, pour une fonctionnalité de direction et d'utiliser une session d'unité de données de protocole, PDU, d'accès multiple ; et
envoyer, à la WTRU, un deuxième message comprenant des deuxièmes informations indiquant un ensemble de règles de direction, de commutation et de séparation de trafic d'accès (ATSSS), dans lequel l'ensemble de règles ATSSS comprend l'une quelconque de fonctions de réplication, d'élimination et d'ordonnancement de paquets (PREOF) et de règles de demande de répétition automatique, de réplication, d'élimination et d'ordonnancement de paquets (PAREO).
